# EUROPEAN PATENT SPECIFICATION

(11) **EP 2 428 468 B1**
(45) Date of publication and mention of the grant of the patent: **28.11.2012**
(21) Application number: 11180100.7
(22) Date of filing: 05.09.2011
(51) Int. Cl.: B65G 17/08

(54) **Conveyor module with improved pin locking element**
Fördermodul mit verbessertem Stiftsperrelement
Module transporteur doté d'un élément amélioré pour bloquer le pivot

(30) Priority: 10.09.2010 IT MI20101645
(43) Date of publication of application: 14.03.2012
(73) Proprietor: System Plast S.r.l., 24060 Telgate (BG) (IT)
(72) Inventor: Memoli, Andrea, 24064 GRUMELLO DEL MONTE (BG) (IT); van der HOEVEN, Ted, 2678 TT De Lier (NL)
(74) Representative: Kratter, Carlo

(56) References cited:
- EP-A1- 1 318 085
- WO-A1-98/07642
- US-A1- 2006 219 530

## Description

The present invention relates to a module for a conveyor formed by connecting together a plurality of said modules in accordance with the precharacterising part of the main claim.

Modules of the aforedescribed type have been known for some time and are, for example, described in documents US 2006/219530 and WO 98/07642. The latter discloses a module according to the preamble of claim 1. However the means for locking the pin which connects one module to another are often difficult to position or remove, particularly because when the modules are employed for conveyors used in very polluted environments, for example in automobile wash stations, the dirt accumulating in the module seat which houses said locking means makes their removal difficult.

It also often happens that known locking means project at least partly from the body of the module with which they are associated, and are therefore subject to wear and damage.

An object of the present invention is to provide a module which overcomes the above drawbacks by facilitating and simplifying the insertion/removal of the pin locking means, particularly in situations in which the modules are used in polluted environments, while safeguarding the integrity both of said locking means and of the modules.

A further object is to provide a module in which the locking means are not subject to wear.

These and other objects which will be apparent to an expert of the art are attained by a module conforming to the characterising part of the accompanying claims.

The invention will be better understood from the accompanying figures, which are provided by way of non-limiting example and in which:
Figure 1 is an exploded view of a module according to the invention,
Figure 2 is a view of the module from above,
Figure 3 is a front view of the module,
Figure 4 is a view from below,
Figure 5 is an enlarged lateral view,
Figure 6 is a lateral view in enlarged section, taken on the line 6- of Figure 2,
Figures 7A, 7B, 7C show a perspective schematic view, a side view, and a top view of a locking element for the module,
Figure 8 shows a portion of a band conveyor formed from a plurality of modules according to the invention.

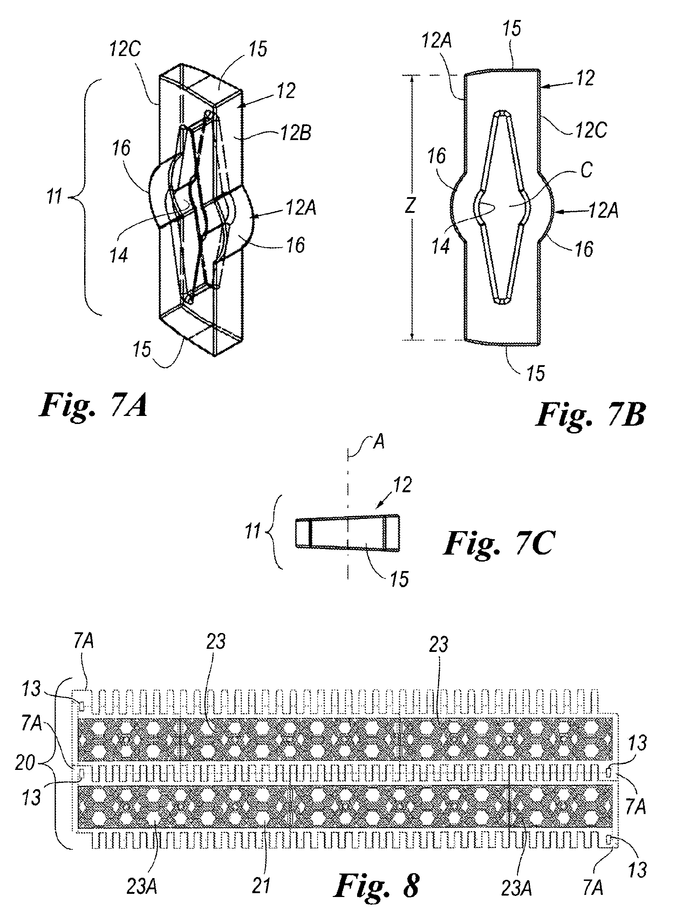

With reference to said figures, a module of the invention is able to form a conveyor 20 (Figure 8), particularly a band conveyor, presenting a plurality of said modules connected together.

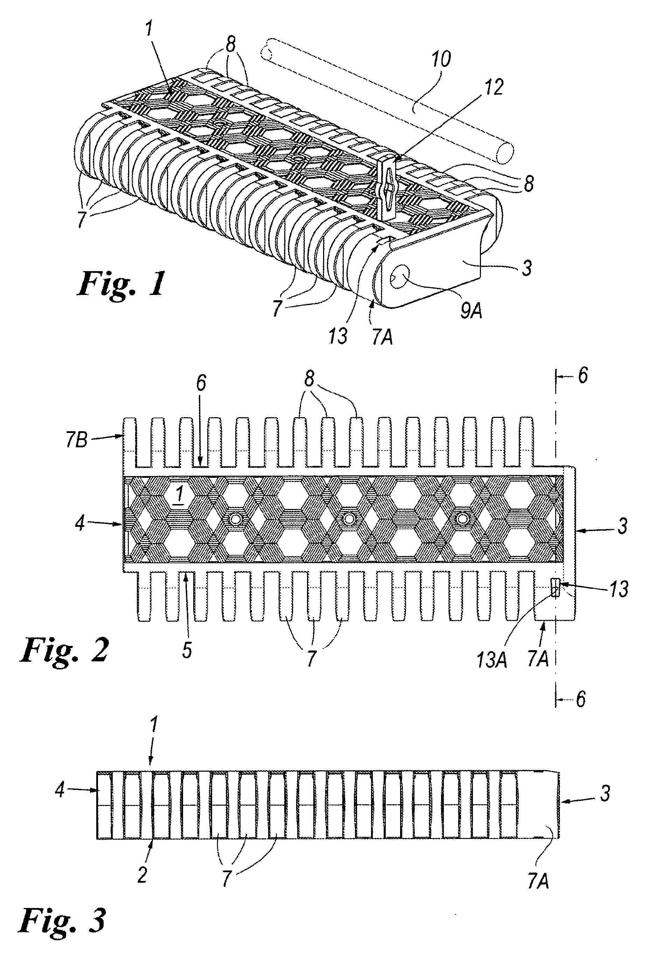

Each module comprises: an upper surface 1, a lower surface 2, two lateral walls 3, 4, a front wall 5, an opposing rear wall 6 (Figure 2) and, projecting from said front wall 5 and rear wall 6, a plurality of elements 7, 8 for connecting one module to another. These connection elements 7, 8 are comb shaped such that the elements of one module can be inserted between the elements of the next or preceding module (as shown in Figure 8). Said elements 7, 8 each comprise a through hole 9, said holes being mutually coaxial and adapted to receive a transverse pin 10 for removably connecting two or more modules together.

Each module comprises means 11 for locking the pin 10 to the module, these comprising at least one locking element 12 removably insertable into a seat 13 provided in an end connection element 7A provided in proximity to one of said lateral walls, said seat 13 communicating with the through hole 9 of the connection elements for receiving the module connection pin 10.

According to the invention, the seat 13 for the locking element 12 extends for the entire module height H, from the module upper surface 1 to its lower surface 2, in positions corresponding with each of said surfaces there being an aperture 13C, 13B for inserting/removing said locking element into or from said seat. Said locking element 12 comprises an elastically deformable portion 12A (Figure 7) which, only if deformed, enables the locking element to be inserted into the seat 13 and to remain retained within said seat, so preventing longitudinal movements of the pin. The end element 7A in which the seat 13 is provided comprises a through hole 9A for passage of the pin 10, said through hole 9A being connected to the seat 13. The seat 13, the locking element 12 and the end element 7A are shaped and dimensioned such that the through hole 9A is substantially coaxial with an axis A (Figure 7C) passing through the centre C (Figure 7B) of a window 14 provided in a position corresponding with the deformable portion 12A of the locking element 12 when this is inserted into said seat 13. In this manner, if dirt should accumulate in the most outer part of the through hole 9A, this can be easily removed for example by a screwdriver, by inserting its tip through said hole and then through the window 14 of the locking element 12.

The locking element 12 is of substantially parallelepiped shape with its upper and lower bases 15 being trapezoidal and slightly curved, to enable the element to be inserted into the relative seat 13 only if orientated in a determined manner and to blend with the slightly curved surfaces of the end connection element 7A in which the seat is provided. The deformable portion 12A of the locking element 12 preferably comprises two semicircular parts 16 projecting centrally from the front wall 12B and rear wall 12C of the locking element at the central window 14 provided in the body of the locking element.

Advantageously the window 14 is of elongated shape and extends symmetrically to the locking element for at least one half of the element height Z, i.e. not only corresponding with the hole 9A for inserting the pin 10.

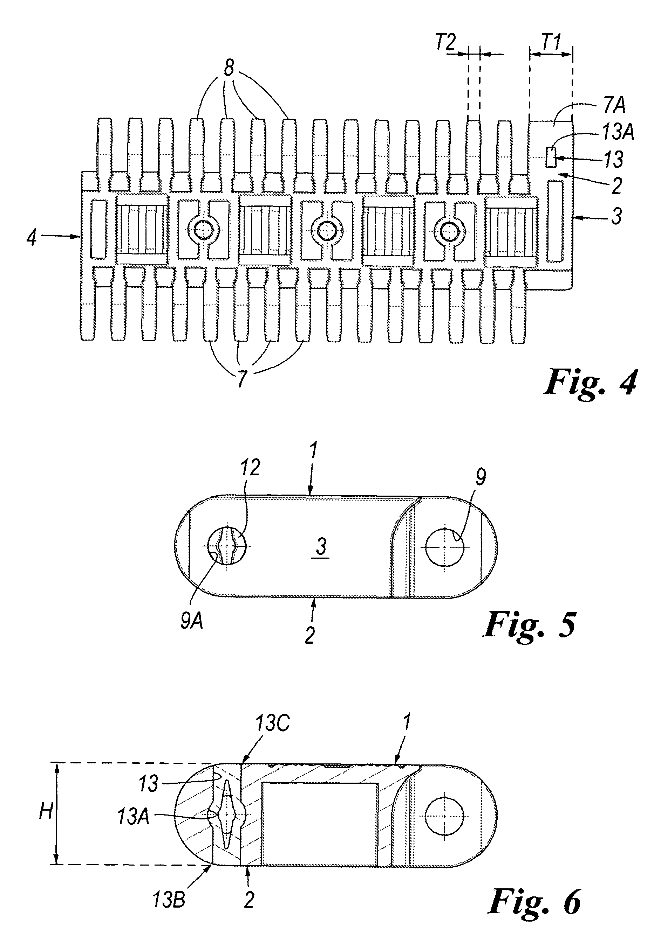

Because of the presence of the window 14 and of the fact that the locking element is formed of an at least partially elastic material (for example acetal), when said element is forcibly urged into its seat 13, which has entry openings 13C, B of dimensions substantially corresponding to those of the bases 15, the projecting deformable central portion 12A of the locking element is compressed inwards to enable the locking element to pass through said entry openings 13C. When the locking element is completely inserted into the relative seat 13, the deformable portion 12A returns elastically into its initial uncompressed position, as the seat 13 centrally comprises a widened zone 13A (Figure 6) which houses, and has substantially the same shape and dimensions as, the projecting parts 16 of the deformable portion 12A of the locking element 12 when these are not deformed. By virtue of the particular shape of the locking element 12 and of the relative seat 13, the locking element is securely snap-locked into its seat once it has been correctly thrust into the seat. The locking element is preferably thrust into its seat for example by a hammer, and can be thrust out of its seat by a screwdriver and hammer, all without damaging either the locking element or the module, which can subsequently be reused.

The seat 13 is dimensioned and shaped complementarily to the locking element 12 when this is in its non-deformed position, so as to house it substantially flush with the upper and lower surfaces of the connection element 7A, without leaving apertures in said surfaces, and also such that the element 13 lies totally within the module.

Advantageously the seat 13 for the locking element is formed entirely and only within the end connection element 7A and not also within the other module portions, for which purpose the end connection element 7A has transverse dimensions T1 (Figure 4) greater than those of the other connection elements 7, and in particular transverse dimensions T1 at least double the transverse dimensions T2 of the other connection elements 7. It should be noted that advantageously the locking means of the invention are entirely housed in the module interior, and are therefore not subject to wear or damage.

## Claims

1. A module for forming a conveyor (20), particularly a modular belt conveyor, presenting a plurality of said modules connected together, the module comprising: an upper surface (1), a lower surface (2), two lateral walls (3, 4), a front wall (5), an opposing rear wall (6) and, projecting from said front wall (5) and rear wall (6), a plurality of elements (7, 8) for connecting one module to another, said connection elements (7, 8) being comb shaped such that the connection elements of one module can be inserted between the elements of a next or preceding module, said connection elements (7, 8) each comprising a through hole (9), said through holes being mutually coaxial and adapted to receive a transverse pin (10) for removably connecting at least two modules together, the module comprising means (11) for blocking longitudinal movements of the pin (10), these comprising at least one locking element (12) removably insertable into a seat (13) provided in the module, said seat (13) communicating with the through hole (9) of the connection elements for receiving the module connection pin (10); the seat (13) for the locking element (12) extending for the entire module height (H), from the module upper surface (1) to its lower surface (2), in positions corresponding with each of said surfaces there being an aperture (13C, 13B) for inserting/removing said locking element into or from said seat,
- said locking element (12) comprising an elastically deformable portion (12A) which, only if deformed, enables the locking element to be inserted into said seat (13) and to remain snap-retained within said seat, so preventing longitudinal movements of the pin, when said locking element is completely inserted into said seat,
- said seat (13) being provided in an end connection element (7A) provided in proximity to one of said lateral walls,
- said end element (7A) in which the seat (13) is provided comprising a through hole (9A) for passage of the pin (10), said through hole (9A) being connected to the seat (13); said module **characterised in that** the locking element (12) is of substantially parallelepiped shape and comprises means (15) to enable the element to be correctly inserted into the relative seat (13) only if orientated in a determined manner, to hence facilitate its positioning.

2. A module as claimed in claim 1, **characterised in that** the seat (13), the locking element (12) and the end element (7A) are shaped and dimensioned such that the through hole (9A) is substantially coaxial with an axis (A) passing through the centre (C) of a window (14) provided in a position corresponding with the deformable portion (12A) of the locking element (12) when this is inserted into said seat (13).

3. A module as claimed in claim 1, **characterised in that** the correct insertion means are such that the locking element (12) is of substantially parallelepiped shape with its upper and lower bases (15) being trapezoidal and slightly curved, to enable the element to be inserted into the relative seat (13) only if orientated in a determined manner and to blend with the slightly curved surfaces of the end connection element (7A) in which the seat is provided.

4. A module as claimed in claim 1, **characterised in that** the deformable portion (12A) of the locking element (12) comprises two parts (16) projecting centrally from the front wall (12B) and rear wall (12C) of the locking element at a central window (14) provided in the body of the locking element.

5. A module as claimed in claim 4, **characterised in that** the window (14) is of elongated shape and extends symmetrically to the locking element for at least one half of the element height (Z).

6. A module as claimed in claim 1, **characterised in that** the seat (13) for the locking element (12) and the locking element itself are shaped complementarily, said seat presenting entry/exit openings (13C) for said element which have dimensions substantially coinciding with those of the bases (15) of said element, a deformable central portion (12A) projecting from said bases of said locking element being compressed inwards during insertion of said element into said seat, to enable the locking element to pass through said entry openings (13C), when the locking element is completely inserted into the relative seat (13) said deformable portion (12A) returning elastically into its undeformed position and seating within a widened zone (13A) of said seat (13), such that the locking element is securely snap-locked in its seat once it has been correctly thrust into said seat.

7. A module as claimed in claim 1, **characterised in that** the seat (13) for the locking element (12) is formed entirely and only within one of the end connection elements (7A) and not also within the other module portions

8. A module as claimed in claim 7, **characterised in that** the end connection element (7A) has transverse dimensions (T1) at least double the transverse dimensions (T2) of the other connection elements (7) of the module.

9. A module as claimed in claim 1, **characterised in that** the locking element (12) is completely housed within the seat (13).

## Patentansprüche

1. Modul zum Bilden eines Förderers (20), insbesondere eines modularen Bandförderers, der mehrere derartige Module aufweist, die miteinander verbunden sind, wobei das Modul aufweist: eine obere Fläche (1), eine untere Fläche (2), zwei Seitenwände (3,4), eine Vorderwand (5), eine gegenüberliegende Rückwand (6) und mehrere von der Vorderwand (5) und der Rückwand (6) abstehende Elemente (7,8) zum Verbinden eines Moduls mit einem weiteren Modul, wobei die Verbindungselemente (7,8) derart kammförmig ausgebildet sind, dass die Verbindungselemente eines Moduls zwischen die Elemente eines nachfolgenden oder vorhergehenden Moduls eingeführt werden können, wobei die Verbindungselemente (7,8) jeweils ein Durchgangsloch (9) aufweisen, wobei die Durchgangslöcher miteinander koaxial sind und zur Aufnahme eines querverlaufenden Stifts (10) zwecks lösbarer gegenseitiger Verbindung mindestens zweier Module in der Lage sind, wobei das Modul Vorrichtungen (11) zum Blockieren von Längsbewegungen des Stifts (10) aufweisen, wobei diese Vorrichtungen mindestens ein Verriegelungselement (12) aufweisen, das lösbar In einen in dem Modul vorgesehenen Sitz (13) einführbar ist, wobei der Sitz (13) mit dem Durchgangsloch (9) der Verbindungselemente in Verbindung steht, um den Modulverbindungsstift (10) aufzunehmen, wobei sich der Sitz (13) für das Verriegelungselement (12) über die gesamte Modul-Höhe (H) von der oberen Fläche (1) des Moduls zu dessen unterer Fläche (2) erstreckt, wobei in Positionen, die mit jeder der Flächen korrespondieren, eine Öffnung (13C,13B) zum Einführen/Entfernen des Verriegelungselements in den oder aus dem Sitz vorgesehen ist,
- wobei das Verriegelungselement (12) einen elastisch verformbaren Abschnitt (12A) aufweist, der nur im Fall seiner Verformung ermöglicht, dass das Verriegelungselement in den Sitz (13) eingeführt wird und, wenn das Verriegelungselement vollständig in den Sitz eingeführt ist, durch Schnappeingriff in dem Sitz rückgehalten wird, um Längsbewegungen des Stifts zu verhindern,
- wobei der Sitz (13) in einem End-Verbindungselement. (7A) vorgesehen ist, das In der Nähe einer der Seitenwände angeordnet ist,
- wobei das End-Element (7A), in dem der Sitz (13) vorgesehen ist, ein Durchgangsloch (9A) für den Durchtritt des Stifts (10) aufweist, wobei das Durchgangsloch (9A) mit dem Sitz (13) verbunden ist;
wobei das Modul **dadurch gekennzeichnet ist, dass** das Verriegelungselement (12) eine im Wesentlichen quaderartige Form hat und Vorrichtungen (15) aufweist, die ein korrektes Einführen des Elements in den betreffenden Sitz (13) nur zulassen, falls dieses in einer bestimmten Weise ausgerichtet ist, um dadurch dessen Positionieren zu erleichtern.

2. Modul nach Anspruch 1, **dadurch gekennzeichnet, dass** der Sitz (13), das Verriegelungselement (12) und das End-Element (7A) derart geformt und dimensioniert sind, dass, wenn das Verriegelungselement In den Sitz (13) eingeführt ist, das Durchgangsloch (9A) im Wesentlichen koaxial mit einer Achse (A) ist, die durch die Mitte (C) eines Fensters (14) verläuft, das in einer dem verformbaren Abschnitt (12A) des Verriegelungselements (12) entsprechenden Position vorgesehen ist.

3. Modul nach Anspruch 1, **dadurch gekennzeichnet, dass** die zum korrekten Einführen vorgesehenen Vorrichtungen derart ausgebildet sind, dass as Verriegelungselement (12) im Wesentlichen eine Quaderform hat, deren obere und untere Basen (15) trapezförmig und leicht gekrümmt sind, um ein Einführen des Elements in den betreffenden Sitz (13) nur zuzulassen, falls dieses in einer bestimmten Weise ausgerichtet ist, und um mit den leicht gekrümmten Flächen des End-Verbindungselements (7A), in dem der Sitz vorgesehen ist, zu verschmelzen.

4. Modul nach Anspruch 1, **dadurch gekennzeichnet, dass** der verformbare Abschnitt (12A) des Verriegelungselements (12) zwei Teile (16) aufweist, die an einem zentralen Fenster (14), das in dem Körper des Verriegelungselements vorgesehen ist, zentral von der Vorderwand (12B) und der Rückwand (12C) des Verriegelungselements abstehen.

5. Modul nach Anspruch 4, **dadurch gekennzeichnet, dass** das Fenster (14) eine länglich Form hat und über mindestens eine Hälfte der Element-Höhe (Z) symmetrisch zu dem Verriegelungselement verläuft.

6. Moduls nach Anspruch 1, **dadurch gekennzeichnet, dass** der Sitz (13) für das Verriegelungselement (12) und das Verriegelungselement
selbst komplementär geformt sind, wobei der Sitz Eintritts-/Austrittsöffnungen (13C) für das Element aufweist, deren Bemessungen im Wesentlichen mit denjenigen der Basen (15) des Elements übereinstimmen, wobei ein verformbarer zentraler Abschnitt (12A), der von den Basen des Verriegelungselements absteht, während der Einführung des Elements In den Sitz nach innen zusammengedrückt wird, um dem Verriegelungselement das Hindurchtreten durch die Eintrittsöffnungen (13C) zu ermöglichen, wenn das Verriegelungselement vollständig in den betreffenden Sitz (13) eingeführt wird, wobei der verformbare Abschnitt (12A) elastisch in seine nichtverformte Position zurückkehrt und eine Position innerhalb einer verbreiterten Zone (13A) des Sitzes (13) derart einnimmt, dass das Verriegelungselement zuverlässi in Schnappeingriff in dem Sitz gehalten ist, nachdem es korrekt in den Sitz gedrückt worden ist.

7. Modul nach Anspruch 1, **dadurch gekennzeichnet, dass** der Sitz (13) für das Verriegelungselement (12) vollständig und ausschließlich in einem der End-Verbindungselemente (7A) und nicht auch in den anderen Modulteilen ausgebildet ist.

8. Modul nach Anspruch 7, **dadurch gekennzeichnet, dass** das End-Verbindungselement (7A) Querbemessungen (T1) hat, die mindestens das Doppelte der Querbemessungen (T2) der anderen Verbindungselemente (7) des Moduls betragen.

9. Modul nach Anspruch 1, **dadurch gekennzeichnet, dass** das Verriegelungselement (12) vollständig In den Sitz (13) untergebracht ist.

## Revendications

1. Module pour former un transporteur (20), notamment un transporteur à courroie modulaire présentant une pluralité desdits modules connectés ensemble, le module comprenant : une surface supérieure (1), une surface inférieure (2), deux parois latérales (3, 4), une paroi avant (5), une paroi arrière opposée (6) et, en saillie sur ladite paroi avant (5) et paroi arrière (6), une pluralité d'éléments (7, 8) pour connecter un module à un autre, lesdits éléments de connexion (7, 8) étant en forme de peigne de manière à ce que les éléments de connexion d'un module puissent être insérés entre les éléments d'un module suivant ou précédent, lesdits éléments de connexion (7, 8) comprenant chacun un trou traversant (9), lesdits trous traversants étant mutuellement coaxiaux et conçus pour recevoir une tige transversale (10) pour connecter de manière amovible au moins deux modules ensemble, le module comprenant des moyens (11) pour bloquer des mouvements longitudinaux de la tige (10), ceux-ci comprenant au moins un élément de verrouillage (12) insérable de manière amovible dans un siège (13) prévu dans le module, ledit siège (13) communiquant avec le trou traversant (9) des éléments de connexion pour recevoir la tige de connexion du module (10) ; le siège (13) pour l'élément de verrouillage (12) s'étendant sur la hauteur totale du module (H), à partir de la surface supérieure (1) du module jusqu'à sa surface inférieure (2), une ouverture (13C, 13B) étant présente à des positions correspondant à chacune desdites surfaces pour insérer/retirer ledit élément de verrouillage dudit siège,
- ledit élément de verrouillage (12) comprenant une partie déformable élastiquement (12A) qui, uniquement si elle est déformée, permet à l'élément de verrouillage d'être inséré dans ledit siège (13) et de rester emboîté dans ledit siège, empêchant ainsi des mouvements longitudinaux de la tige lorsque ledit élément de verrouillage est complètement inséré dans ledit siège,
- ledit siège (13) étant disposé dans un élément de connexion d'extrémité (7A) disposé à proximité d'une desdites parois latérales,
- ledit élément d'extrémité (7A) dans lequel le siège (13) est disposé comprenant un trou traversant (9A) pour le passage de la tige (10), ledit trou traversant (9A) étant connecté au siège (13) ;
ledit module étant **caractérisé en ce que** l'élément de verrouillage (12) est de forme essentiellement parallélépipédique et comprend des moyens (15) pour permettre à l'élément d'être inséré correctement dans le siège (13) relatif uniquement s'il est orienté d'une manière déterminée, afin de faciliter son positionnement.

2. Module selon la revendication 1, **caractérisé en ce que** le siège (13), l'élément de verrouillage (12) et l'élément d'extrémité (7A) sont façonnés et dimensionnés de manière à ce que le trou traversant (9A) soit essentiellement coaxial avec un axe (A) passant par le centre (C) d'une fenêtre (14) disposée à une position correspondant à la partie déformable (12A) de l'élément de verrouillage (12) lorsque celui-ci est inséré dans ledit siège (13).

3. Module selon la revendication 1, **caractérisé en ce que** les moyens d'insertion correcte sont tels que l'élément de verrouillage (12) est de forme essentiellement parallélépipédique avec sa base supérieure et inférieure (15) trapézoïdales et légèrement incurvées pour permettre à l'élément d'être inséré dans le siège (13) relatif uniquement s'il est orienté d'une manière déterminée et de s'accorder avec les surfaces légèrement incurvées de l'élément de connexion d'extrémité (7A) dans lequel le siège est disposé.

4. Module selon la revendication 1, **caractérisé en ce que** la partie déformable (12A) de l'élément de verrouillage (12) comprend deux parties (16) en saillie centralement sur la paroi avant (12B) et la paroi arrière (12C) de l'élément de verrouillage au niveau d'une fenêtre centrale (14) disposée dans le corps de l'élément de verrouillage.

5. Module selon la revendication 4, **caractérisé en ce que** la fenêtre (14) est de forme allongée et s'étend symétriquement par rapport à l'élément de verrouillage sur au moins une moitié de la hauteur de l'élément (Z).

6. Module selon la revendication 1, **caractérisé en ce que** le siège (13) pour l'élément de verrouillage (12) et l'élément de verrouillage lui-même sont façonnés de manière complémentaire, ledit siège présentant des ouvertures d'entrée/de sortie (13C) pour ledit élément qui ont des dimensions coïncidant essentiellement avec celles des bases (15) dudit élément, une partie centrale déformable (12A) en saillie sur lesdites bases dudit élément de verrouillage étant comprimée vers l'intérieur pendant l'insertion dudit élément dans ledit siège pour permettre à l'élément de verrouillage de traverser lesdites ouvertures d'entrée (13C), ladite partie déformable (12A) revenant élastiquement en sa position non déformée et reposant dans une zone élargie (13A) dudit siège (13) lorsque l'élément de verrouillage est complètement inséré dans le siège (13) relatif, de manière à ce que l'élément de verrouillage soit solidement emboîté dans son siège une fois qu'il a été correctement poussé dans ledit siège.

7. Module selon la revendication 1, **caractérisé en ce que** le siège (13) pour l'élément de verrouillage (12) est formé entièrement et uniquement dans un des éléments de connexion d'extrémité (7A) et non pas également dans les autres parties du module.

8. Module selon la revendication 7, **caractérisé en ce que** l'élément de connexion d'extrémité (7A) a des dimensions transversales (T1) qui sont au moins le double des dimensions transversales (T2) des autres éléments de connexion (7) du module.

9. Module selon la revendication 1, **caractérisé en ce que** l'élément de verrouillage (12) est complètement abrité dans le siège (13).
